# EUROPÄISCHE PATENTSCHRIFT

(11) **EP 2 542 358 B1**
(45) Veröffentlichungstag und Bekanntmachung des Hinweises auf die Patenterteilung: **02.05.2018**
(21) Anmeldenummer: 11706549.0
(22) Anmeldetag: 28.02.2011
(51) Int. Cl.: B08B 5/02, B08B 9/00, B08B 9/032, A21C 7/00

(54) **WERKZEUG UND VERFAHREN FÜR DAS REINIGEN UND/ODER TROCKNEN EINES HOHLRAUMS**
TOOL AND METHOD FOR CLEANING AND/OR DRYING A CAVITY
OUTIL ET PROCÉDÉ POUR LE NETTOYAGE ET/OU SÉCHAGE D'UNE CAVITÉ

(30) Priorität: 05.03.2010 DE 102010002633
(43) Veröffentlichungstag der Anmeldung: 09.01.2013
(73) Patentinhaber: Ecoclean GmbH, 70794 Filderstadt (DE)
(72) Erfinder: DAVID, Hermann-Josef, 52156 Monschau (DE); KÄSKE, Egon, 52078 Aachen (DE)
(74) Vertreter: Gauss, Nikolai
(86) Internationale Anmeldenummer: PCT/EP2011/052937
(87) Internationale Veröffentlichungsnummer: WO 2011/107435

(56) Entgegenhaltungen:
- CA-A1- 2 555 889
- DE-A1- 10 318 238
- DE-B3-102005 019 285

## Beschreibung

Die Erfindung betrifft Werkzeug zum Reinigen und/oder Trocknen eines durch eine Öffnung zugänglichen Hohlraums, etwa einer Ausnehmung in einem Werkstück, z. B. einer Bohrung, insbesondere einer Gewindebohrung, mit einem Werkstückadapter, der eine Werkstück-Anlagefläche und einen Anschluss *hat, durch den Medium zum Reinigen und*/*oder Trocknen zugeführt werden kann, z. B. Reinigungsflüssigkeit oder Trocknungsluft oder Heißluft, und der eine Öffnung aufweist, durch die Schmutzpartikel und Medium zum Reinigen und*/*oder Trocknen mit Flüssigkeits- bzw. Dampfpartikel austreten können, wobei* in dem Werkstückadapter eine Düse mit einer *in einem Gehäuse angeordneten Düsenkammer ausgebildet ist, die eine seitliche Wandung hat und eine Achse aufweist, wobei der Anschluss mit einem in Bezug auf die Achse seitlichen Versatz durch das Gehäuse der Düsenkammer geführt ist und in die seitliche Wandung der Düsenkammer mit einem in die Wandung der Düsenkammer tangentenförmig übergehenden Wandungsabschnitt mündet, und wobei in der Düsenkammer ein Abflusskanal ausgebildet ist, der Medium zum Reinigen und*/*oder Trocknen, das mit Schmutzpartikeln versetzt ist, zu der Öffnung in dem Werkstückadapter transportiert.*

*Darüber hinaus betrifft die Erfindung Verfahren zum Reinigen und*/*oder Trocknen einer Ausnehmung in einem Werkstück, z. B. einer Bohrung, insbesondere einer Gewindebohrung, bei dem Medium zum Reinigen und*/*oder Trocknen in die Ausnehmung mit einer primären Zyklonströmung geführt wird.*

*Ein Werkzeug der eingangs genannten Art ist aus der* CA 2 555 889 A1 *bekannt.*

*In der* DE 103 18 238 B4 *ist ein Werkzeug für das Reinigen der Innenflächen von Gewindebohrungen in einem Werkstück beschrieben,* das einen lanzenförmigen Blaseinsatz hat. Dieser Blaseinsatz kann in eine Gewindebohrung eingeführt werden. In dem Blaseinsatz ist ein Zufuhrkanal für Reinigungsmedium ausgebildet. Der Zufuhrkanal hat einen Öffnungsschlitz, der sich an dem Blaseinsatz in Längsrichtung erstreckt. Der Öffnungsschlitz dient dazu, die Wandung einer Gewindebohrung direkt mit Reinigungsmedium tangential anzuströmen. Damit können die Gewindegänge in der Gewindebohrung von Schmutzpartikeln befreit werden. Um mit diesem Reinigungswerkzeug eine zufriedenstellende Reinigungswirkung zu erzielen, ist eine Anpassung der Länge des Blaseinsatzes an die Tiefe einer zu reinigenden Gewindebohrung notwendig. Das Reinigungswerkzeug hat deshalb einen Aufbau, der technisch aufwändig ist. Für das definierte Reinigen von fernab des Öffnungsschlitzes liegenden Abschnitten einer Gewindebohrung in einem Werkstück ist darüber hinaus ein rotatorisches Bewegen des Reinigungswerkzeugs erforderlich.

*Die* DE 10 2005 019 285 B3 *offenbart eine Reinigungsanlage für spanend bearbeitete Werkstücke. Diese Anlage ermöglicht es, die Kühlschmierflüssigkeit in Bearbeitungsmaschinen für die Werkstückreinigung einzusetzen. Um die Kühlschmierflüssigkeit zu reinigen gibt es in der Reinigungsanlage ein Filtersystem.*

Bei der mechanischen Bearbeitung von Werkstücken, etwa von Motorenkomponenten, z. B. Zylinderköpfen, werden Kühlschmierstoffe eingesetzt und es entstehen Späne. Hierdurch werden Werkstücke verunreinigt. Diese Verunreinigungen können Störungen bei nachfolgenden Montageprozessen hervorrufen und die technische Funktionalität von Systemen beeinträchtigen, die aus entsprechenden Werkstücken hergestellt sind. Verunreinigungen mit Kühlschmierstoffen und Spänen in Zylinderkopfbohrungen und Einspritzdüsen können bei Verbrennungsmotoren Motorschäden verursachen, die irreparabel sind.

Aufgabe der Erfindung ist es, ein Werkzeug mit verbesserter Reinigungs-und/oder Trocknungswirkung für Ausnehmungen in einem Werkstück bereitzustellen, sowie ein verbessertes Verfahren zum Reinigen und/oder Trocknen für Werkstück-Ausnehmungen anzugeben, das insbesondere zum Entfernen von Kühlschmierstoffen und Spänen aus Bohrungen, insbesondere aus Sacklochbohrungen und aus Gewindebohrungen und zum Reinigen und/oder Trocknen von einseitig offenen zylindrischen Hohlräumen geeignet ist.

*Diese Aufgabe wird durch ein Werkzeug mit den Merkmalen des Anspruchs 1 und ein Verfahren mit den Merkmalen des Anspruchs 11 gelöst. Vorteilhafte Ausführungsformen der Erfindung sind in den abhängigen Ansprüchen angegeben.*

Eine Idee der Erfindung ist, dass sich die Wandung einer Ausnehmung in einem Werkstück mit hoher Effizienz reinigen bzw. trocknen lässt, indem diese wie die Wandung eines für die Fliehkraftabscheidung von Flüssiggemischen eingesetzten Hydrozyklons mit einer Zyklonströmung angeströmt wird. Darüber hinaus ist es ein Gedanke der Erfindung, die sogenannte sekundäre Zyklonströmung, die in Form des inneren, üblicherweise aufwärtsgerichteten Wirbels in einem Hydrozyklon ausgebildet wird, für den Abtransport von Schmutzpartikeln oder Flüssigkeitströpfchen aus einer Ausnehmung in einem Werkstück einzusetzen.

Das Werkzeug kann mit Fluiden als Reinigungsmedium betrieben werden, insbesondere mit Luft, Gas oder Wasser. Eine hohe Reinigungswirkung lässt sich erzielen, indem das Reinigungswerkzeug mit Reinigungsmedium betrieben wird, das mit Granulat oder Eiskristallen versetzt ist. Das Werkzeug kann auch zum Trocknen von Hohlräumen eingesetzt werden. Hierzu wird bei dem Werkzeug günstigerweise Heißluft als Trocknungsmedium eingesetzt.

In einer bevorzugten Ausgestaltung der Erfindung erstreckt sich die Düsenkammer mit sich verjüngender Querschnittsgeometrie hin zu der Werkstück-Anlagefläche. Eine besonders gute Reinigungswirkung und/oder Trocknungswirkung wird erreicht, indem die Düsenkammer in einem werkstückseitigen Abschnitt eine Ringspaltöffnung hat.

In der Düsenkammer ist ein Abflusskanal ausgebildet-ist, mit dem Schmutzpartikel und Reinigungsmedium zu der Öffnung im Werkzeugadapter transportiert werden kann. Der Abflusskanal hat eine in der Düsenachse fluchtende Achse. Indem der Abflusskanal eine verlagerbare Eintrittsöffnung für Schmutzpartikel hat, lässt sich die Abfuhr von Schmutzpartikeln aus der Ausnehmung in dem Werkstück optimieren. Vorteilhaft ist insbesondere, wenn die Eintrittöffnung des Abflusskanals für Schmutzpartikel, Flüssigkeitspartikel oder Flüssigkeitsdampf in die Ausnehmung des Werkstücks hineinbewegt werden kann. Eine vorteilhafte Ausgestaltung der Erfindung sieht vor, dass die Werkstück-Anlagefläche mit einem vorzugsweise eine Dichtung, z. B. einen O-Ring, umfassenden Dichtabschnitt ausgebildet ist, mit dem die Ausnehmung in dem Werkstück umgeben werden kann.

Das erfindungsgemäße Werkzeug eignet sich zum Einsatz in einer Vorrichtung zum Reinigen und/oder Trocknen, die eine Einrichtung für das Zuführen von Reinigungs- und/oder Trocknungsmedium aufweist, welche durch einen Fluidkanal mit Druck beaufschlagtes Reinigungs- und/oder Trocknungsmedium für das Werkzeug bereitstellt. Dabei kann das gleichzeitige Reinigen und/oder Trocknen von mehreren Werkstücken mit Ausnehmungen oder mehreren Ausnehmungen an einem Werkstück vorgesehen werden, indem die Vorrichtung zum Reinigen und/oder Trocknen eine Vielzahl von entsprechenden Werkzeugen enthält. Insbesondere ist es günstig, bei der Vorrichtung für das Aufnehmen von Werkstücken mit Ausnehmungen, die gereinigt oder getrocknet werden sollen, einen ein- oder auch mehrachsigen Manipulator, insbesondere einen Handhabungsroboter vorzusehen, mittels dessen ein aufgenommenes Werkstück an die Werkstück-Anlagefläche eines Werkzeugs angelegt werden kann.

Die Erfindung besteht z. B. auch darin, eine Ausnehmung in einem Werkstück, eine Bohrung, insbesondere eine Gewindebohrung oder auch einen zylindrischen Hohlraum, etwa den Innenraum eines Rohres mit Abschluss, dadurch zu reinigen, dass in die Ausnehmung des Werkstücks Reinigungsmedium und/oder Trocknungsmedium mit einer primären Zyklonströmung geführt wird. Als Reinigungsmedium kann dabei ein flüssiges oder auch ein gasförmiges Fluid eingesetzt werden. Insbesondere ist es dabei möglich, Partikel aus der Ausnehmung mittels einer sich in der Ausnehmung ausbildenden sekundären Zyklonströmung abzutransportieren. Für das Trocknen einer Ausnehmung in einem Werkstück ist z. B. Heißluft geeignet. Ein besonders guter Reinigungseffekt lässt sich erzielen, wenn die primäre Zyklonströmung mit einer in einem an dem Werkstück anliegenden Werkstückadapter ausgebildeten Düse erzeugt wird. Hier ist es günstig, wenn der Werkstückadapter mit einem in einer Werkstück-Anlagefläche ausgebildeten Dichtabschnitt die Ausnehmung in dem Werkstück mit Dichtwirkung umgibt. Mit diesem Reinigungsverfahren lassen sich insbesondere Bohrungen oder Gewindebohrungen reinigen, an deren Bohrungsdurchmesser die Austrittsöffnung der Düse angepasst ist, mittels der die primäre Zyklonströmung erzeugt wird. Außerdem können mit einem erfindungsgemäßen Werkzeug auch Bohrlöcher in Wänden, in Beton oder Gestein gereinigt werden. Hierfür ist Luft oder Wasser als Reinigungsmedium besonders gut geeignet. Indem hier das mit Schmutzpartikeln versetzte Reinigungsmedium, etwa Luft und Betonstaub, das durch die Öffnung für das Austreten von Schmutzpartikeln und Reinigungsmedium in dem Werkstück strömt, durch ein Filtersystem geführt wird oder mit einem Filterbeutel aufgefangen wird, kann eine Belastung der Umwelt mit insbesondere staubförmigen Schmutzpartikeln vermieden werden.

Im Folgenden wird die Erfindung anhand der in der Zeichnung in schematischer Weise dargestellten Ausführungsbeispiele näher erläutert.

Es zeigen:
- Fig. 1: einen Schnitt eines Werkzeugs zum Reinigen und/oder Trocknen mit einem Werkstück;
- Fig. 2: einen Schnitt des Werkzeugs zum Reinigen und/oder Trocknen in der Ebene II - II aus Fig. 1;
- Fig. 3: eine Draufsicht auf das Werkzeug zum Reinigen und/oder Trocknen in der Ebene III - III aus Fig. 1;
- Fig. 4: eine Reinigungsvorrichtung mit mehreren Werkzeugen zum Reinigen und einen Handhabungsroboter; und
- Fig. 5: einen Schnitt eines Werkzeugs zum Reinigen und Trocknen von Rohrkörpern mit Abschluss.

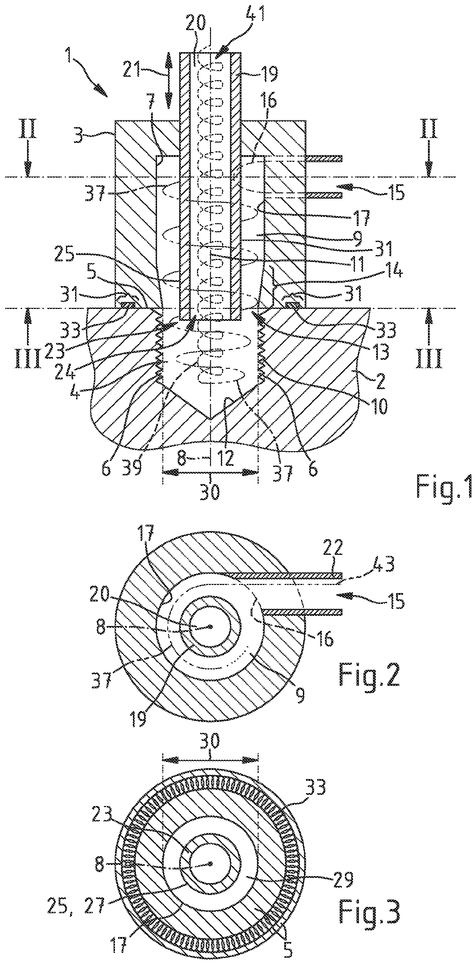

Die Fig. 1 zeigt ein Werkzeug 1 zum Reinigen und/oder Trocknen an einem Werkstück 2. Das Werkzeug 1 umfasst einen Werkstück-Adapater 3. Der Werkstück-Adapter 3 hat eine Werkstück-Anlagefläche 5. Er enthält eine Düse 7 mit einer Düsenkammer 9. Die Düsenkammer 9 erstreckt sich entlang einer Achse 11 mit Rotationssymmetrie zu einer Öffnung 13 in der Werkstück-Anlagefläche 5. In einem zu der Werkstück-Anlagefläche 5 weisenden Abschnitt 14 ist die Düsenkammer 9 konisch verjüngt, d.h. der Durchmesser des Querschnitts der Düsenkammer 9 nimmt zu der Werkstück-Anlagefläche 5 hin ab.

Das Werkzeug 1 hat einen Anschluss 15 für Reinigungs- oder Trocknungsmedium. Die Fig. 2 zeigt einen Schnitt des Werkzeugs zum Reinigen in der Ebene II - II aus Fig. 1. Der Anschluss 15 ist im Bezug auf die Achse 11 der Düsenkammer 9 mit seitlichem Versatz durch das Gehäuse der Düsenkammer geführt. Der Anschluss 15 mündet mit einer Öffnung 16 in die seitliche Wandung 17 in der Düssenkammer 9. Dabei geht der Wandungsabschnitt 22 des Anschlusses 15 tangentenförmig in die Wandung 17 der Düsenkammer über. Dies bewirkt, dass die Fluidströmung 43 am Anschluss 15 in der Düsenkammer auf eine Kreisbahn gezwungen wird, so dass sich die gewünschte primäre Zyklonströmung 37 in der Düsenkammer 9 ausbildet. Durch den Anschluss 15 kann mit Druck beaufschlagtes Reinigungs- oder Trocknungsmedium in die Düsenkammer 9 einströmen. In die Düsenkammer 9 ragt ein Abflussrohr 19. Das Abflussrohr 19 bildet einen Abflusskanal 20 für Reinigungsmedium, das mit Schmutzpartikeln 6 versetzt ist, oder für Trocknungsmedium, das mit Flüssigkeits- und/oder Dampfpartikeln versetzt ist.

Die Fig. 3 zeigt eine Draufsicht auf die Werkstück-Anlagefläche 5 des Werkstück-Adapters 3. In dem Stirnabschnitt 23 gibt es eine Öffnung 24, durch die Reinigungsfluid, das mit Schmutzpartikeln versetzt ist oder entsprechendes Trocknungsmedium, in das Abflussrohr 19 einströmen kann. Die im Bereich der Werkstück-Anlagefläche 5 liegende Wandung 25, 27 des Abflussrohrs 19 begrenzt mit der Wandung 17 der Düsenkammer 9 an der Werkstück-Anlagefläche 5 einen Ringspalt 29.

Günstig ist ein Außendurchmesser des Abflussrohres 19, der drei mal so groß wie die Breite des Ringspalts 29. Versuche haben ergeben, dass sich mit dem Werkzeug 1 eine sehr gute Reinigungswirkung bzw. Trocknungswirkung erzielen lässt, wenn die Länge der Düsenkammer 9 etwa das 8-fache des Durchmessers beträgt, mit dem der Anschluss 15 für Reinigungsmedium in die Düsenkammer 9 mündet.

Das Abflussrohr 19 ist in der Düsenkammer 9 entsprechend dem Doppelpfeil 21 verstellbar angeordnet. Das Abflussrohr 19 hat einen werkstückseitigen Stirnabschnitt 23. Durch Bewegen des Abflussrohrs 19 entsprechend dem Doppelpfeil 21 kann die Position von dessen Öffnung 24 initiiert werden. Die Öffnung 24 kann im Inneren der Düsenkammer 9 positioniert werden. Günstig ist aber auch eine Einstellung des Abflussrohres 19, bei dem sich die Öffnung 24 in der Ebene der Werkstück-Anlagefläche befindet. Von Vorteil ist auch die Möglichkeit der Einstellung des Abflussrohrs 19 in eine Position, bei der die Öffnung 24 im Inneren einer Ausnehmung 4 in dem Werkstück 2 angeordnet ist.

Eine besonders gute Reinigungs- bzw. Trocknungswirkung lässt sich mit dem Werkzeug 1 insbesondere bei Werkstück-Bohrungen erzielen, deren Durchmesser 30 dem Durchmesser der Öffnung 13 der Düsenkammer 9 in der Werkstück-Anlagefläche 5 entspricht.

Die Ausnehmung 4 in dem Werkstück 2 hat eine Gewindebohrung 4. In der Gewindebohrung 4 befinden sich Schmutzpartikel 6. Die Gewindebohrung 4 ist ein Sackloch, das eine Geometrie am Bodenbereich 12 hat, die sich verjüngt. Um die Gewindebohrung 4 von den Schmutzpartikeln 6 zu reinigen, wird das Werkstück 2 mit der Gewindebohrung 4 so an die Werkstück-Anlagefläche 5 des Werkstück-Adapters 3 angelegt, dass die Achse 8 der Gewindebohrung 4 mit der Achse 11 der Düsenkammer 9 in dem Werkzeug 1 fluchtet. Um ein dichtes Anliegen der Werkstück-Anlagefläche 5 an dem Werkstück 2 zu ermöglichen, hat die Werkzeug-Anlagefläche 5 einen Dichtabschnitt 31 mit einer Dichtung in Form eines O-Rings 33.

Für das Reinigen der Gewindebohrung 4 wird für den Anschluss 15 an dem Werkzeug 1 mit Druck beaufschlagtes Reinigungsmedium 35 seitlich in die Düsenkammer 9 eingeströmt. Dabei bildet sich in der Düsenkammer 9 eine primäre Zyklonströmung 37 aus, mit der das Reinigungsmedium in die Gewindebohrung 4 des Werkstücks 2 gelangt.

In der Gewindebohrung 4 reißt die primäre Zyklonströmung 37 die in Gewindegängen 10 fest sitzenden Schmutzpartikel mit sich. Aufgrund der sich konisch verjüngenden Geometrie im Abschnitt 14 der Düsenkammer 9 kommt es zu einer Verdrängung von Reinigungsmedium in Richtung der Achse 11 der Düsenkammer 9. Das führt zu einem Aufstau in der Gewindebohrung 4 Hierdurch entsteht in dem Bohrloch der *Gewindebohrung 4* eine sekundäre Zyklonströmung 39, welche Schmutzpartikel aus der Gewindebohrung 4 zum Werkzeug 1 hin transportiert. Diese sekundäre Zyklonströmung 39 wird von dem Abflusskanal 20 des Abflussrohrs 19 aufgenommen. Sie gelangt über die Austrittsöffnung 41 im Abflussrohr 19 zusammen mit den Schmutzpartikeln 6 ins Freie.

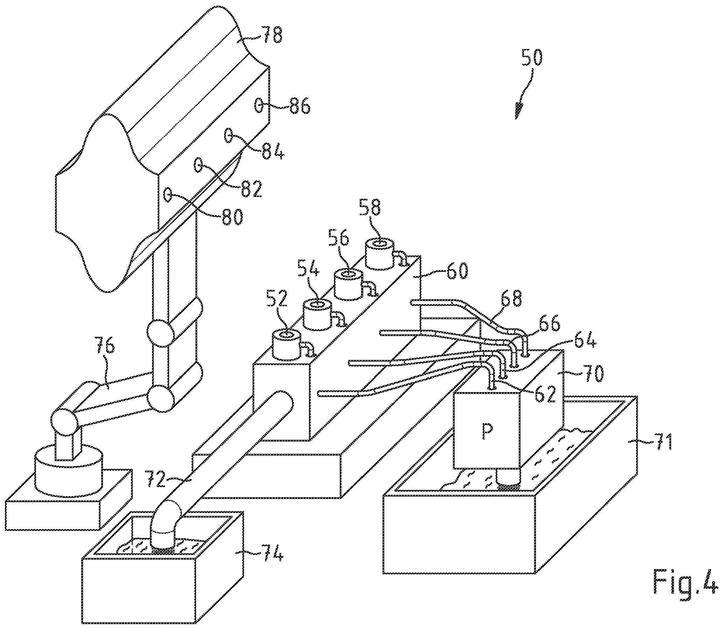

Die Fig. 4 zeigt eine Reinigungsvorrichtung 50, die mehrere Reinigungswerkzeuge 52, 54, 56, 58 enthält. Jedes Reinigungswerkzeug 52, 54, 56, 58 hat einen Aufbau, der demjenigen des Werkzeugs 1 aus Fig. 1 und 2 entspricht. Die Reinigungswerkzeuge 52, 54, 56, 58 sind an einem Reinigungsblock 60 aufgenommen. An dem Reinigungsblock 60 werden die Reinigungswerkzeuge 52, 54, 56, 58 über Druckanschlüsse 62, 64, 66, 68 mit Reinigungsmedium versorgt. Dieses Reinigungsmedium wird über einen Pumpenblock 70 aus einem Fluidbehälter 71 gefördert. Dem Reinigungsblock 60 ist ein Abflusskanal 72 für das Abführen von mit Schmutzpartikeln versetztem Reinigungsmedium zu einem Auffangbehälter 74 vorgesehen. Alternativ hierzu kann das mit Schmutzpartikeln versetzte Reinigungsmedium z. B. auch zu einer Aufbereitungsanlage für Reinigungsmedium geführt werden.

Die Reinigungsvorrichtung 50 umfasst einen Handhabungsroboter 76, mit dem ein Werkstück in Form eines Motorblocks 78 an den Reinigungswerkzeugen 52, 54, 56, 58 punktgenau angeordnet werden kann, um Gewindebohrungen 80, 82, 84, 86 in dem Motorblock 78 von Schmutzpartikeln zu reinigen.

Alternativ hierzu ist es auch möglich, für die Reinigungswerkzeuge 52, 54, 56, 58 einen ein- oder mehrgelenkigen Manipulator vorzusehen, mit dem die Reinigungswerkzeuge zu einem entsprechenden Werkstück bewegt werden können.

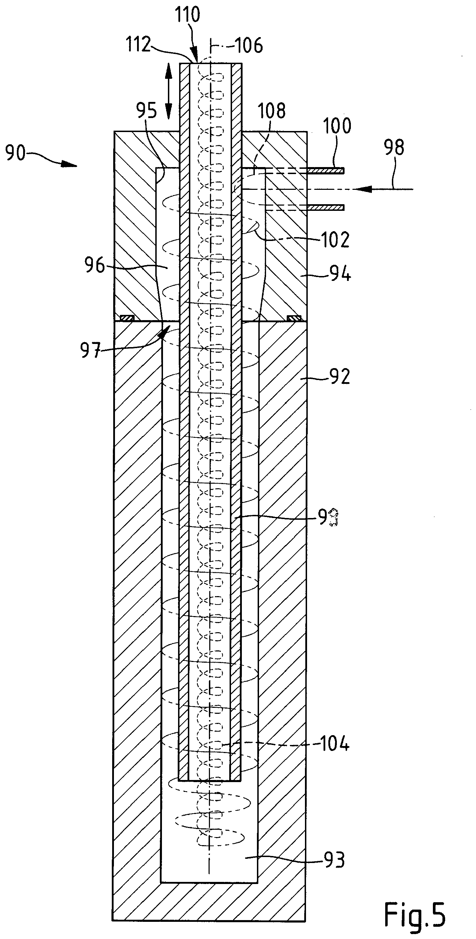

Das Werkzeug 90 in Fig. 5 ist für das Reinigen und Trocknen eines Rohrkörpers 92 mittels Heißluft ausgelegt, der ein zylindrisches Hohlvolumen 93 hat. Hierzu hat das Werkzeug 90 einen Werkstück-Adapter 94, der eine Düsenkammer 96 hat. Die Ringspaltöffnung 97 in der Düsenkammer 96 hat einen Durchmesser, der dem Innendurchmesser des Rohrkörpers 92 entspricht. Das Werkzeug 90 hat ein Abflussrohr 99 96, das als Ableitung von mit Schmutzpartikeln und Flüssigkeitspartikeln versetzter Heißluft dient. Das Abflussrohr 99 96 ist an die Länge des Rohrkörpers 92 angepasst. Durch Einblasen von mit Druck beaufschlagter Heißluft 98 durch den Anschluss 100 des Werkzeugs 90 über die Öffnung 108 in der Düsenkammer 96, die wie die Öffnung 16 in der Düsenkammer 9 des in Fig. 1 gezeigten Werkzeugs 1 zur Achse 106 der Düsenkammer 96 seitlich versetzt ist, bildet sich in der Düsenkammer 96 und im Rohrkörper 92 eine primäre Zyklonströmung 102 aus. Die Zyklonströmung reißt Schmutzpartikel und Flüssigkeitströpfchen an der Innenwandung des Rohrkörpers 92 mit sich mit. Im Bereich des Abschlusses des Rohrkörpers 92 wird eine sekundäre Zyklonströmung 104 ausgebildet. Diese Zyklonströmung 104 wird mit dem Abflussrohr 96 aufgefangen und gelangt so ins Freie.

Zusammenfassend sind folgende bevorzugte Merkmale festzuhalten: Ein Werkzeug 1 zum Reinigen und/oder Trocknen einer Ausnehmung 4 in einem Werkstück, z. B. einer Bohrung, insbesondere einer Gewindebohrung hat einen Werkstückadapter 3. Dieser Werkstückadapter weist eine Werkstück-Anlagefläche 5 auf und hat einen Anschluss 15 für das Zuführen von Reinigungs- und/oder Trocknungsmedium. In dem Anschluss-Adapter 3 gibt es eine Öffnung 41 für das Austreten von mit Schmutzpartikeln versetztem Reinigungs- und/oder Trocknungsmedium. In dem Werkstückadapter 3 ist eine Düse 7 mit einer Düsenkammer 9 ausgebildet. In die Düsenkammer 9 mündet der Anschluss 15 für das Zuführen von Reinigungs- und/oder Trocknungsmedium derart, dass sich in der Düse 7 eine Zyklonströmung 37 aus Reinigungs- und/oder Trocknungsmedium ausbilden kann, die aus der Düse 7 austritt. Die Zyklonströmung 37 transportiert Schmutzpartikel 6 aus der Ausnehmung 4 in dem Werkstück 2 zu der Öffnung 41 für das Austreten von Schmutzpartikeln 6 in dem Werkstückadapter 41.

## Patentansprüche

1. Werkzeug (1, 52, 54, 56, 58, 90) zum Reinigen und/oder Trocknen eines durch eine Öffnung zugänglichen Hohlraums, etwa einer Ausnehmung in einem Werkstück (2, 78, 92), z. B. einer Bohrung, insbesondere einer Gewindebohrung (4), mit einem Werkstückadapter (3, 94), der eine Werkstück-Anlagefläche (5) und einen Anschluss (15, 100) *hat, durch den Medium zum Reinigen und*/*oder Trocknen zugeführt werden kann, z. B. Reinigungsflüssigkeit oder Trocknungsluft oder Heißluft, und der eine Öffnung (41) aufweist, durch die Schmutzpartikel (6) und Medium zum Reinigen und*/*oder Trocknen mit Flüssigkeits- bzw. Dampfpartikel austreten können, wobei* in dem Werkstückadapter (3, 94) eine Düse (7, 95) mit einer *in einem Gehäuse angeordneten Düsenkammer (9, 96) ausgebildet ist, die eine seitliche Wandung* (17) *hat und eine Achse* (11,106) *aufweist, wobei der Anschluss (15, 100) mit einem in Bezug auf die Achse (11) seitlichen Versatz durch das Gehäuse der Düsenkammer (9, 96) geführt ist und in die seitliche Wandung (17) der Düsenkammer (9, 96) mit einem in die Wandung (17) der Düsenkammer (9, 96) tangentenförmig übergehenden* Abschnitt der Wandung *(17) mündet, und wobei in der Düsenkammer* (9, 96) *ein Abflusskanal* (20, 99) *ausgebildet ist, der Medium zum Reinigen und*/*oder Trocknen, das mit Schmutzpartikeln (6) versetzt ist, zu der Öffnung* (41, 112) *in dem Werkstückadapter* (3, 94) *transportiert,*
***dadurch gekennzeichnet,***
***dass*** *der Abflusskanal* (20, 99) *eine mit der Achse* (11, 106) *der Düse* (7, 95) *fluchtende Achse hat.*

2. Werkzeug nach Anspruch 1, **dadurch gekennzeichnet, dass** die Düsenkammer (9, 96) mit sich verjüngender Querschnittsgeometrie hin zu der Werkstück-Anlagefläche (5) erstreckt ist.

3. Werkzeug nach Anspruch 1 oder 2, **dadurch gekennzeichnet, dass** die Düsenkammer (9, 96) in einem werkstückseitigen Abschnitt eine Ringspaltöffnung (29) hat.

4. Werkzeug nach *einem der Ansprüche 1 bis 3,* **dadurch gekennzeichnet, dass** der Abflusskanal (20) eine verlagerbare Eintrittsöffnung (24) *für Medium zum Reinigen und*/*oder Trocknen* hat, das mit Schmutzpartikeln (6) versetzt ist.

5. Werkzeug nach Anspruch 4, **dadurch gekennzeichnet, dass** die Eintrittsöffnung (24) des Abflusskanals (20) für mit Schmutzpartikeln (6) versetztes *Medium zum Reinigen und*/*oder Trocknen* in die Ausnehmung (4) des Werkstücks (2) hineinbewegt werden kann.

6. Werkzeug nach einem der Ansprüche 1 bis 5, **dadurch gekennzeichnet, dass** die Werkstück-Anlagefläche (5) mit einem vorzugsweise eine Dichtung (33) umfassenden Dichtabschnitt (31) ausgebildet ist, mit dem die Ausnehmung (4) in dem Werkstück (2) unter Dichtwirkung umgeben werden kann.

7. Vorrichtung zum Reinigen und/oder Trocknen (50) mit einer Einrichtung (70) für das Zuführen von *Medium zum Reinigen und*/*oder Trocknen, die* mit Druck beaufschlagtes *Medium zum Reinigen* und/oder *Trocknen* an dem Anschluss *(15, 100) eines nach einem der Ansprüche 1 bis 6 ausgebildeten Werkzeugs (52, 54,* 56, 58) *durch einen Fluidkanal (62, 64, 66, 68) bereitstellt, durch den Medium für das Reinigen und*/*oder Trocknen zugeführt werden kann.*

8. Vorrichtung zum Reinigen und/oder Trocknen (50) nach Anspruch 7, mit einer vorzugsweise ein Filtersystem umfassenden Einrichtung für das Auffangen *von aus der Öffnung (41) eines nach einem der Ansprüche 1 bis 6 ausgebildeten Werkzeugs (52, 54, 56, 58) austretenden* Schmutzpartikeln und von *Medium zum Reinigen und*/*oder Trocknen mit Flüssigkeits- bzw. Dampfpartikeln, das aus der Öffnung (41) eines nach einem der Ansprüche 1 bis 6 ausgebildeten Werkzeugs (52, 54,* 56, 58) *austritt.*

9. Vorrichtung zum Reinigen und/oder Trocknen (50) nach Anspruch *7 oder 8,* bei der für das gleichzeitige Reinigen und/oder Trocknen von mehreren Werkstücken mit Ausnehmungen oder von mehreren Ausnehmungen (80, 82, 84, 86) an einem Werkstück (78) eine Vielzahl von Werkzeugen (52, 54, 56, 58) nach einem der Ansprüche 1 bis *6* vorgesehen ist.

10. Vorrichtung zum Reinigen und/oder Trocknen (50) nach einem der Ansprüche 7 *bis 9*, bei der für das Aufnehmen von Werkstücken (78) mit zu reinigenden Ausnehmungen (80, 82, 84, 86) ein Handhabungsroboter (76) vorgesehen ist, mittels dessen ein aufgenommenes Werkstück (78) an die Werkstück-Anlagefläche eines nach einem der Ansprüche 1 bis 6 ausgebildeten Werkzeugs angelegt werden kann.

11. Verfahren zum Reinigen und/oder Trocknen einer Ausnehmung (4, 93) in einem Werkstück (2, 92), z. B. einer Bohrung, insbesondere einer Gewindebohrung (4), bei dem *Medium zum Reinigen* und/oder *Trocknen* in die Ausnehmung (4) mit einer primären Zyklonströmung (37, 102) geführt wird,
***dadurch gekennzeichnet,***
***dass*** *Schmutzpartikel (6) und Medium zum Reinigen und*/*oder Trocknen mit Flüssigkeitströpfchen bzw. Dampf (110) aus der Ausnehmung (4) mittels einer sich in der Ausnehmung* (4, 93) *ausbildenden sekundären Zyklonströmung (39, 104) abtransportiert werden.*

12. Verfahren nach Anspruch 11, **dadurch gekennzeichnet, dass** die primäre Zyklonströmung (37, 102) mit einer in einem an dem Werkstück anliegenden Werkstückadapter (3, 94) ausgebildeten Düse (7, 95) erzeugt wird, wobei der Werkstückadapter (3, 94) mit einem in einer Werkstück-Anlagefläche (5) ausgebildeten Dichtabschnitt (31) die Ausnehmung (4, 93) in dem Werkstück (2, 92) mit Dichtwirkung umgibt.

13. Verfahren nach einem der Ansprüche 11 *oder 12,* **dadurch gekennzeichnet, dass** die Ausnehmung eine Bohrung oder Gewindebohrung (4) oder ein vorzugsweise zylindrisches Hohlvolumen (93) ist und die primäre Zyklonströmung (37, 102) mit einer Düse (7, 95) erzeugt wird, die eine an den Durchmesser der Bohrung oder Gewindebohrung oder des vorzugsweise zylindrischen Hohlvolumens (93) angepasste Ringspaltöffnung (29, 97) hat.

## Claims

1. Tool (1, 52, 54, 56, 58, 90) for cleaning and/or drying a cavity accessible through an opening, for instance a recess in a workpiece (2, 78, 92), e.g. a bore, in particular a threaded bore (4), comprising a workpiece adapter (3, 94) which has a workpiece contact surface (5) and a connection (15, 100) through which medium for cleaning and/or drying can be supplied, e.g. cleaning liquid or drying air or hot air, and which has an opening (41) through which dirt particles (6) and medium for cleaning and/or drying containing liquid or vapor particles can be discharged, wherein a nozzle (7, 95) with a nozzle chamber (9, 96) arranged in a housing is formed in the workpiece adapter (3, 94), which nozzle has a side wall (17) and has an axis (11, 106), wherein the connection (15, 100) is guided through the housing of the nozzle chamber (9, 96) with a lateral offset in relation to the axis (11) and issues into the side wall (17) of the nozzle chamber (9, 96) with a portion of the wall (17) which merges tangentially into the wall (17) of the nozzle chamber (9, 96), and wherein an outflow channel (20, 99) is formed in the nozzle chamber (9, 96), said outflow channel transporting medium for cleaning and/or drying which is mixed with dirt particles (6) to the opening (41, 112) in the workpiece adapter (3, 94),
**characterized**
**in that** the outflow channel (20, 99) has an axis which is aligned with the axis (11, 106) of the nozzle (7, 95).

2. Tool according to Claim 1, **characterized in that** the nozzle chamber (9, 96) is extended with a tapering cross-sectional geometry toward the workpiece contact surface (5).

3. Tool according to Claim 1 or 2, **characterized in that** the nozzle chamber (9, 96) has an annular gap opening (29) in a portion on the workpiece side.

4. Tool according to one of Claims 1 to 3,
**characterized in that** the outflow channel (20) has a displaceable inlet opening (24) for medium for cleaning and/or drying which is mixed with dirt particles (6).

5. Tool according to Claim 4, **characterized in that** the inlet opening (24) of the outflow channel (20) for medium for cleaning and/or drying which is mixed with dirt particles (6) can be moved into the recess (4) in the workpiece (2).

6. Tool according to one of Claims 1 to 5,
**characterized in that** the workpiece contact surface (5) is formed with a sealing portion (31), which preferably comprises a seal (33) and with which the recess (4) in the workpiece (2) can be encompassed with a sealing action.

7. Apparatus for cleaning and/or drying (50), comprising a device (70) for the supply of medium for cleaning and/or drying, which provides pressurized medium for cleaning and/or drying at the connection (15, 100) of a tool (52, 54, 56, 58) formed according to one of Claims 1 to 6 through a fluid channel (62, 64, 66, 68), through which medium for cleaning and/or drying can be supplied.

8. Apparatus for cleaning and/or drying (50) according to Claim 7, comprising a device, which preferably comprises a filter system, for the collection of dirt particles which exit the opening (41) of a tool (52, 54, 56, 58) formed according to one of Claims 1 to 6, and of medium for cleaning and/or drying containing liquid or vapor particles which exits the opening (41) of a tool (52, 54, 56, 58) formed according to one of Claims 1 to 6.

9. Apparatus for cleaning and/or drying (50) according to Claim 7 or 8, in which a multiplicity of tools (52, 54, 56, 58) according to one of claims 1 to 6 are provided for simultaneously cleaning and/or drying a plurality of workpieces having recesses or a plurality of recesses (80, 82, 84, 86) on a workpiece (78).

10. Apparatus for cleaning and/or drying (50) according to one of claims 7 to 9, in which a handling robot (76) is provided for receiving workpieces (78) having recesses (80, 82, 84, 86) to be cleaned, by means of which handling robot a received workpiece (78) can be placed onto the workpiece contact surface of a tool formed according to one of claims 1 to 6.

11. Process for cleaning and/or drying a recess (4, 93) in a workpiece (2, 92), e.g. a bore, in particular a threaded bore (4), in which process medium for cleaning and/or drying is guided into the recess (4) with a primary cyclonic flow (37, 102),
**characterized**
**in that** dirt particles (6) and medium for cleaning and/or drying containing liquid droplets or vapor (110) are transported away out of the recess (4) by means of a secondary cyclonic flow (39, 104) which forms in the recess (4, 93).

12. Process according to Claim 11, **characterized in that** the primary cyclonic flow (37, 102) is generated by way of a nozzle (7, 95) formed in a workpiece adapter (3, 94) which lies against the workpiece, wherein the workpiece adapter (3, 94) encompasses the recess (4, 93) in the workpiece (2, 92) with a sealing action by way of a sealing portion (31) formed in a workpiece contact surface (5).

13. Process according to either of Claims 11 and 12,
**characterized in that** the recess is a bore or threaded bore (4) or a preferably cylindrical hollow volume (93), and the primary cyclonic flow (37, 102) is generated by way of a nozzle (7, 95) which has an annular gap opening (29, 97) adapted to the diameter of the bore or threaded bore or of the preferably cylindrical hollow volume (93).

## Revendications

1. Outil (1, 52, 54, 56, 58, 90) de nettoyage et/ou de séchage d'une cavité accessible par une ouverture, par exemple une découpe ménagée dans une pièce (2, 78, 92), par exemple un alésage, notamment un alésage fileté (4), à l'aide d'un adaptateur (3, 94) de pièce qui possède une surface (5) de pose sur la pièce et un raccord (15, 100) par lequel peut être amené un fluide de nettoyage et/ou de séchage, par exemple un liquide de nettoyage, de l'air de séchage ou de l'air chaud, et qui présente une ouverture (41) par laquelle des particules d'encrassement (6) et le fluide de nettoyage et/ou de séchage peuvent sortir avec des particules de liquide ou de vapeur, une tuyère (7, 95) présentant une chambre (9, 96) disposée dans un boîtier étant formée dans l'adaptateur (3, 94) de la pièce, possédant une paroi latérale (17) et un axe (11, 106), le raccord (15, 100) étant guidé dans le boîtier de la chambre (9, 96) de la tuyère avec un décalage latéral par rapport à l'axe (11) et débouchant dans la paroi latérale (17) de la chambre (9, 96) de la tuyère par une section de la paroi (17) qui se prolonge de manière tangentielle en la paroi (17) de la chambre (9, 96) de la tuyère, un canal d'évacuation (20, 99) qui transporte le fluide de nettoyage et/ou de séchage ayant entraîné des particules d'encrassement (6) vers l'ouverture (41, 112) ménagée dans l'adaptateur (3, 94) de la pièce étant formé dans la chambre (9, 96) de la tuyère,
**caractérisé en ce que**
le canal d'évacuation (20, 99) possède un axe aligné sur l'axe (11, 106) de la tuyère (7, 95).

2. Outil selon la revendication 1, **caractérisé en ce que** la chambre (9, 96) de la tuyère s'étend jusqu'à la surface de pose (5) sur la pièce avec une section transversale dont la géométrie se rétrécit.

3. Outil selon les revendications 1 ou 2, **caractérisé en ce que** la chambre (9, 96) de la tuyère présente une ouverture (29) en l'interstice annulaire dans une section située côté pièce.

4. Outil selon l'une des revendications 1 à 3, **caractérisé en ce que** le canal d'évacuation (20) présente une ouverture d'entrée (24) déplaçable pour le fluide de nettoyage et/ou de séchage chargé de particules d'encrassement (6).

5. Outil selon la revendication 4, **caractérisé en ce que** l'ouverture d'entrée (24) du canal d'évacuation (20) prévue pour le fluide de nettoyage et/ou de séchage ayant emporté des particules d'encrassement (6) peut être déplacée à l'intérieur de la découpe (4) ménagée dans la pièce (2).

6. Outil selon l'une des revendications 1 à 5, **caractérisé en ce que** la surface de pose (5) est configurée avec une partie d'étanchéité (31) qui comprend de préférence un joint d'étanchéité (33) et par laquelle la découpe (4) ménagée dans la pièce (2) peut être entourée en exerçant un effet d'étanchéité.

7. Ensemble de nettoyage et/ou de séchage (50) doté d'un dispositif (70) d'amenée d'un fluide de nettoyage et/ou de séchage qui délivre un fluide de nettoyage et/ou de séchage mis sous pression au raccordement (15, 100) d'un outil (52, 54, 56, 58) configuré selon l'une des revendications 1 à 6 par un canal (62, 64, 66, 68) pour fluide par lequel le fluide de nettoyage et/ou de séchage peut être amené.

8. Ensemble de nettoyage et/ou de séchage (50) selon la revendication 7, présentant un dispositif de reprise de particules d'encrassement sortant de l'ouverture (41) d'un outil (52, 54, 56, 58) configuré selon l'une des revendications 1 à 6 et d'un fluide de nettoyage et/ou de séchage présentant des particules de liquide ou de vapeur qui sortent de l'ouverture (41) d'un outil (52, 54, 56, 58) configuré selon l'une des revendications 1 à 6.

9. Ensemble de nettoyage et/ou de séchage (50) selon les revendications 7 ou 8, dans lequel, pour le nettoyage et/ou le séchage simultanés de plusieurs pièces présentant des découpes ou de plusieurs découpes (80, 82, 84, 86) prévues sur une pièce (78), plusieurs outils (52, 54, 56, 58) selon l'une des revendications 1 à 6 sont prévus.

10. Ensemble de nettoyage et/ou de séchage (50) selon les revendications 7 à 9, dans lequel pour la reprise de pièces (78) présentant des découpes (80, 82, 84, 86) à nettoyer, un robot de manipulation (76) est prévu et permet de placer une pièce (78) reprise sur la surface de pose de pièce d'un outil configuré selon l'une des revendications 1 à 6.

11. Procédé de nettoyage et/ou de séchage d'une découpe (4, 93) ménagée dans une pièce (2, 92), par exemple d'un alésage en particulier d'un alésage fileté (4), dans lequel un fluide de nettoyage et/ou de séchage est amené dans la découpe (4) avec un écoulement primaire cyclonique (37, 102),
**caractérisé en ce que**
des particules d'encrassement (6) et le fluide de nettoyage et/ou de séchage chargé de gouttelettes de liquide ou de vapeur (110) peuvent être extraits de la découpe (4) au moyen d'un écoulement secondaire cyclonique (39, 104) formé dans la découpe (4, 93).

12. Procédé selon la revendication 11, **caractérisé en ce que** l'écoulement cyclonique primaire (37, 102) est formé par une tuyère (7, 95) prévue sur un adaptateur (3, 94) de pièce placé sur la pièce, l'adaptateur (3, 94) de pièce entourant avec un effet d'étanchéité la découpe (4, 93) ménagée dans la pièce (2, 92) par une section d'étanchéité (31) formée dans une surface de pose (5) de la pièce.

13. Procédé selon l'une des revendications 11 ou 12, **caractérisé en ce que** la découpe est un alésage, un alésage fileté (4) ou une cavité (93) de préférence cylindrique et l'écoulement cyclonique primaire (37, 102) est formé à l'aide d'une tuyère (7, 95) qui possède une ouverture (29, 97) en interstice annulaire adaptée au diamètre de l'alésage, de l'alésage fileté ou de la cavité (93) de préférence cylindrique.
